# EUROPEAN PATENT APPLICATION

(11) **EP 4 712 244 A1**
(43) Date of publication of application: **18.03.2026**
(21) Application number: 24940936.8
(22) Date of filing: 08.11.2024
(51) Int. Cl.: H01M 50/358, H01M 50/333, H01M 50/296, H01M 50/249

(54) **BATTERY ASSEMBLY**

(30) Priority: 27.06.2024 KR 20240084812
(71) Applicant: LG ENERGY SOLUTION, LTD., Seoul 07335 (KR)
(72) Inventor: CHANG, Hyuk-Kyun, Daejeon 34122 (KR); KIM, Soo-Youl, Daejeon 34122 (KR)
(74) Representative: BCKIP Part mbB
(86) International application number: PCT/KR2024/017639
(87) International publication number: WO 2026/005151

(57) **Abstract**

Disclosed is a battery assembly. A battery assembly according to an embodiment of the present disclosure may include a frame providing a space therein and having an opening formed at the rear; a battery cell positioned inside the frame; a rear end cover coupled to the opening and having a venting hole; and a venting channel that has a body providing a space therein, an inlet hole formed in the body and communicating with the venting hole, and an outlet hole formed in the body and configured to be openable.

## Description

### TECHNICAL FIELD

The present disclosure relates to a battery assembly.

This application is based on and claims priority from Korean Patent Application No. 10-2024-0084812, filed on June 27, 2024, with the Korean Intellectual Property Office, the disclosure of which is incorporated herein in its entirety by reference.

### BACKGROUND ART

As the demand for portable electronic products such as smartphones, tablet PCs, and smart watches has increased significantly and electric vehicles have become increasingly widespread, research on batteries mounted thereon, particularly secondary batteries that can be repeatedly charged and discharged has been actively conducted.

Currently commercialized secondary batteries include nickel cadmium batteries, nickel hydrogen batteries, nickel zinc batteries, lithium secondary batteries, and the like, and among them, lithium secondary batteries are in the spotlight as they have advantages of free charge/discharge due to almost no memory effect compared to nickel-based secondary batteries, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium and large devices such as electric vehicles and energy storage systems (ESSs). These secondary batteries are accommodated together inside a module case in a state where a plurality of them are electrically connected, which may form one battery module. At this time, each of the secondary batteries included in one battery module may be referred to as a battery cell. And, such multiple battery modules may be connected to form one battery pack.

However, when the battery pack includes multiple battery modules therein and each battery module includes multiple battery cells in this way, it may be vulnerable to a thermal chain reaction between battery modules or between battery cells. For example, when an event such as thermal runaway occurs inside any one battery module, the propagation of such thermal runaway to other battery modules or battery cells needs to be suppressed. If the propagation of thermal runaway between battery modules or battery cells is not properly suppressed, an event occurring in a specific battery module or battery cell may cause a thermal chain reaction in other battery modules or battery cells, which may cause an explosion or fire or increase its scale.

In particular, when an event such as thermal runaway occurs in any one battery module, gas or flame may be randomly discharged to the outside. At this time, if the discharge of gas or flame is not properly controlled, gas or flame may be discharged toward other battery modules, which may cause a thermal chain reaction in other battery modules. In particular, a module terminal exists on the front side of the battery module, and a configuration for electrical connection to other battery modules or battery packs, such as a module busbar or the like, may exist. Therefore, if flames are discharged to the front side of this battery module, the module terminal may be broken and an electrical short may occur within the battery pack. Additionally, other battery modules may exist on the front side of the battery module, and thus if flames are discharged to the front side of a specific battery module, the discharged flames may be directed to other battery modules, which may easily cause fire spread between battery modules.

If thermal propagation between battery modules or battery cells is not properly controlled, a voltage drop in the battery module or battery pack may occur suddenly. And, this may cause a sudden shutdown of a device on which battery modules or battery packs are mounted, resulting in unexpected damage. For example, if a voltage drop in the battery pack occurs suddenly while an electric vehicle is in motion, there is no time to secure enough time to move the electric vehicle to a safe place.

In addition, if a fire or explosion occurs suddenly due to a failure to properly control thermal propagation between battery modules or battery cells, it is highly likely to cause personal damage to users. For example, when thermal runaway occurs in an electric vehicle, if a certain level of time or more is not secured before it progresses to a full-blown fire, the passengers may not be able to escape safely.

### DISCLOSURE

### Technical Problem

The present disclosure is designed to solve the problems of the related art, and therefore the present disclosure is directed to providing a battery assembly having an improved structure so as to appropriately control the discharge of flames or the like generated inside the battery assembly, and a battery pack or a vehicle including the same.

Additionally, the present disclosure may be directed to providing a structure capable of preventing damage to the exterior of a battery pack when a thermal event occurs.

Additionally, the present disclosure may be directed to preventing flames or ignitable particles from being discharged to the outside of a battery assembly when a thermal event occurs.

Additionally, the present disclosure may be directed to providing a structure capable of suppressing thermal propagation between battery assemblies.

However, technical problems to be solved by the present disclosure are not limited to the above-described problems, and other problems not mentioned herein may be clearly understood by those skilled in the art from the following description of the present disclosure.

### Technical Solution

A battery assembly according to an embodiment of the present disclosure for achieving the above-described object may include a frame providing a space therein and having an opening formed at the rear; a battery cell positioned inside the frame; a rear end cover coupled to the opening and having a venting hole; and a venting channel that has a body providing a space therein, an inlet hole formed in the body and communicating with the venting hole, and an outlet hole formed in the body and configured to be openable.

Additionally, the outlet hole may be formed on an upper surface of the body.

Additionally, the venting channel may include a cover that opens and closes the outlet hole; and an elastic member that provides a restoring force in a direction in which the cover is closed.

Additionally, the venting channel may further include a guide bar penetrating the cover and the elastic member.

Additionally, the venting channel may include a partition that divides the interior of the body along the vertical direction.

Additionally, the partition may be provided in plurality, and the plurality of partitions may be disposed along the left-right direction.

Additionally, the plurality of partitions may divide a space provided by the body into a plurality of venting spaces, wherein the inlet hole and the outlet hole may be provided in each of the plurality of venting spaces.

Additionally, the plurality of outlet holes may be configured to be independently openable.

Additionally, the venting channel may be fastened to the rear end cover.

Additionally, the battery assembly may further include a power terminal protruding forward from the frame.

A battery pack according to one aspect of the present disclosure includes a battery assembly of the present disclosure.

Additionally, the battery pack may further include a case providing a space therein and accommodating the battery assembly, wherein the case may include a base plate on which the battery assembly is installed; and a side wall installed on the base plate, wherein the venting channel may be disposed between the rear end cover and the side wall.

A vehicle according to one aspect of the present disclosure includes a battery assembly of the present disclosure.

### Advantageous Effects

According to at least one of the embodiments of the present disclosure, when gas or flame is generated inside a battery assembly, the discharge of such gas or flame may be appropriately controlled.

According to at least one of the embodiments of the present disclosure, damage to the exterior of a battery pack may be prevented even when a thermal event occurs.

According to at least one of the embodiments of the present disclosure, the electrical safety of a battery assembly may be improved.

According to at least one of the embodiments of the present disclosure, thermal propagation between battery assemblies may be suppressed when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing a battery pack according to an embodiment of the present disclosure.
FIG. 2 is an exploded view showing a partial configuration of the battery pack of FIG. 1.
FIG. 3 is a view showing the battery module of FIG. 2.
FIG. 4 is an exploded view showing a partial configuration of the battery module of FIG. 3.
FIG. 5 is an enlarged view of a partial configuration of FIG. 4.
FIG. 6 is a view showing the configuration of FIG. 5 in a different direction.
FIG. 7 is a view showing a modified embodiment of FIG. 6.
FIG. 8 is a view showing the venting channel of FIG. 2.
FIG. 9 is a view showing a cross-sectional configuration taken along the cutting line C-C' of FIG. 8.
FIG. 10 is a view showing the venting channel of FIG. 8 in a different direction.
FIGS. 11 and 12 are views showing the coupling of the venting channel and the battery module of FIG. 2.
FIG. 13 is a view showing a cross-sectional configuration taken along the cutting line B-B' of FIG. 1.
FIG. 14 is a view showing a change in the configuration of FIG. 13 when a thermal event occurs.
FIG. 15 is a view showing a cross-sectional configuration taken along the cutting line A-A' of FIG. 1.
FIG. 16 is a view showing a change in the configuration of FIG. 15 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

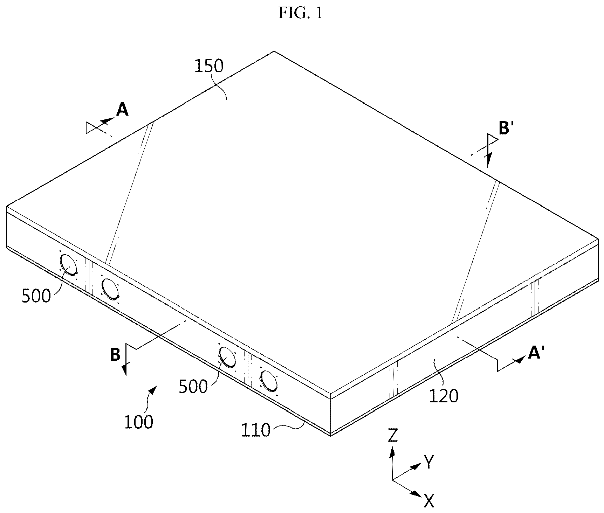

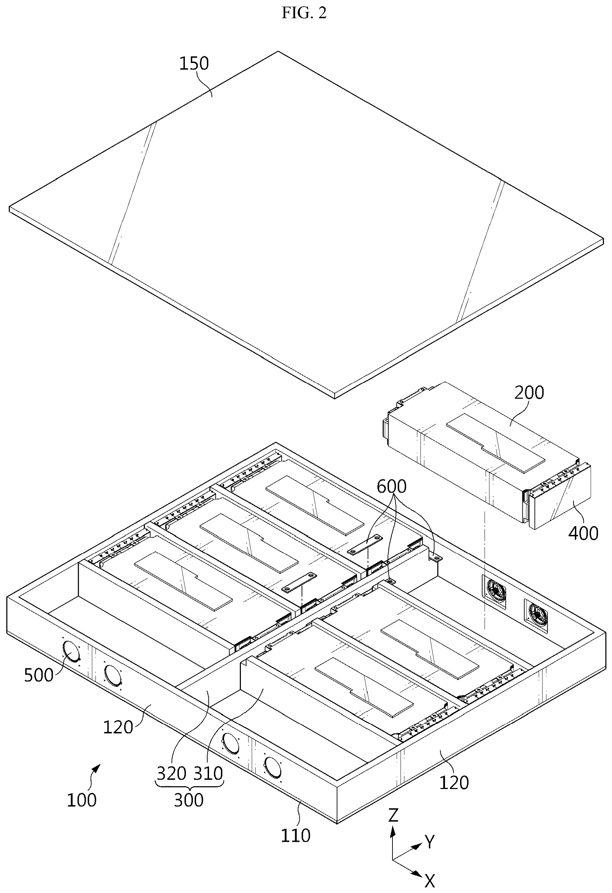

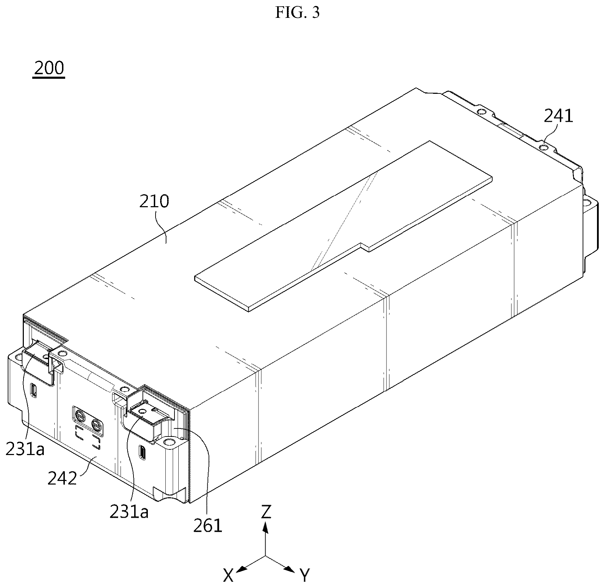

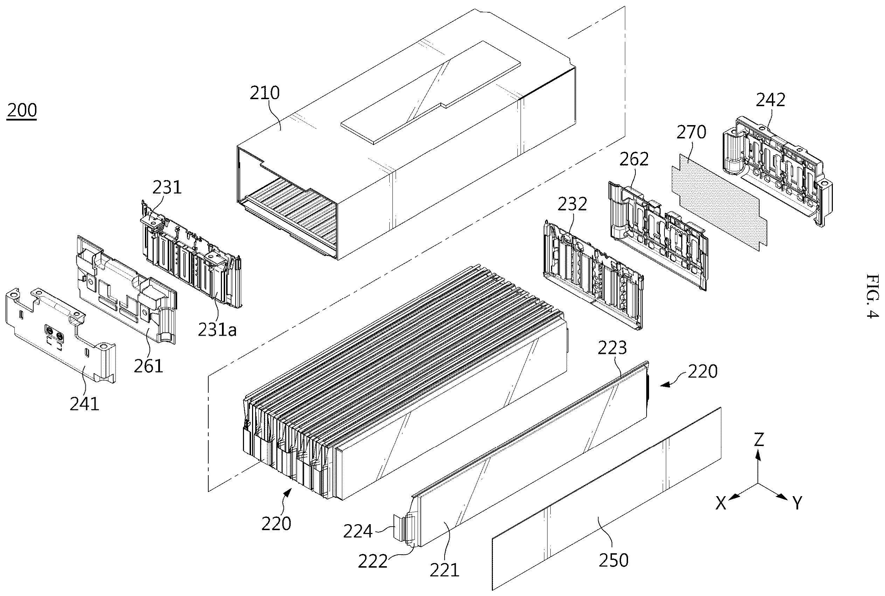

FIG. 1 is a view showing a battery pack according to an embodiment of the present disclosure. FIG. 2 is an exploded view showing a partial configuration of the battery pack of FIG. 1. FIG. 3 is a view showing the battery module 200 of FIG. 2. FIG. 4 is an exploded view showing a partial configuration of the battery module 200 of FIG. 3.

Referring to FIGS. 1 to 4, a battery assembly according to an embodiment of the present disclosure may include a frame 210. The frame 210 may have a cuboidal shape. The frame 210 may provide a space therein. The frame 210 may have a top plate, a bottom plate, and a pair of side plates. Additionally, the frame 210 may have a shape in which the front surface and the rear surface are open. Alternatively, the frame 210 may have an opening formed in the front. Additionally, the frame 210 may have an opening formed in the rear.

The battery assembly according to an embodiment of the present disclosure may include a battery cell 220. The battery cell 220 may be accommodated inside the frame 210. The battery cell 220 may be provided in plurality. The plurality of battery cells 220 may be stacked along the left-right direction or the Y-axis direction. The battery cell 220 may include a receiving portion 221 having an electrode assembly, a first sealing portion 222 protruding toward the front side and the rear side of the receiving portion 221, and a second sealing portion 223 protruding toward the upper side of the receiving portion 221. Additionally, the battery cell 220 may include an electrode lead 224 protruding toward the front side and the rear side of the first sealing portion 222, respectively. Each battery cell 220 may extend along the front-rear direction or the X-axis direction. The electrode lead 224 may protrude toward the front side and the rear side of each battery cell 220.

The battery cell 220 may mean a secondary battery. In particular, the battery cell 220 may be a pouch-type secondary battery. However, the shape of the battery cell 220 is not limited to a pouch shape, and the battery cell 220 may have various shapes such as a cylindrical shape or a cuboidal shape. The battery cell 220 may be provided in plurality.

A battery assembly according to an embodiment of the present disclosure may include a rear end cover 242. The rear end cover 242 may be coupled to the rear of the frame 210. The rear end cover 242 may be coupled to an opening formed at the rear of the frame 210. The rear end cover 242 may include a third venting hole 242a.

The battery assembly according to an embodiment of the present disclosure may include a venting channel 400. The venting channel 400 may include a body 410. The body 410 may form the exterior of the venting channel 400. The body 410 may provide a space therein. The venting channel 400 may have an inlet hole 411 formed in the body 410 and communicating with the third venting hole 242a. The third venting hole 242a and the inlet hole 411 may be disposed to face each other. The venting channel 400 have an outlet hole 412 formed in the body 410. The outlet hole 412 may be configured to be openable.

When a thermal event occurs from the battery cell 220, the venting gas G and the ignitable particles F may be discharged through the third venting hole 242a. At this time, the venting gas G and the ignitable particles F may collide with the body 410 of the venting channel 400. The ignitable particles F may decrease in energy after colliding with the body 410 and then may fall downward. As a result, the ignitable particles F may be blocked from being discharged to the outside of the venting channel 400. The venting gas G may may decrease in energy after colliding with the body 410 and may move upward. The outlet hole may be opened due to an increase in pressure inside the body 410. The venting gas G may be discharged to the outside of the venting channel 400 through the outlet hole 412. At this time, energy of the venting gas G may be reduced, and configurations adjacent to the battery assembly may be prevented from being damaged by the venting gas G. When the venting gas G is discharged from the venting channel 400, the internal pressure of the venting channel 400 may be reduced. When the internal pressure of the venting channel 400 is reduced, the outlet hole 412 may be closed. As a result, the venting gas G may be blocked from flowing into the venting channel 400. As a result, the propagation of thermal events may be suppressed.

Referring to FIGS. 1 to 4, a battery pack according to an embodiment of the present disclosure may include a case 100. The case 100 may provide a space therein. The case 100 may include a base plate 110, a side wall 120, and a pack cover 150. The base plate 110 may have a square shape. The base plate 110 may have a flat plate shape. The base plate 110 may form the exterior of the battery pack. The base plate 110 may provide an internal space of the battery pack.

A battery pack according to an embodiment of the present disclosure may include a pack cover 150. The pack cover 150 may have a square plate shape. The pack cover 150 may have a flat plate shape. The pack cover 150 may form the exterior of the battery pack. The pack cover 150 may cover an internal space of the battery pack.

The battery assembly according to an embodiment of the present disclosure may be positioned inside the case 100. The battery assembly may include a battery module 200. The battery assembly 200 may include a venting channel 400. The battery assembly may be provided in plurality.

Referring to FIGS. 1 to 4, the battery pack according to an embodiment of the present disclosure may include a partition wall 300. The partition wall 300 may include a first partition wall 310 and a second partition wall 320. The partition wall 300 may be provided in plurality. The partition wall 300 may be installed, fastened, fixed, coupled or attached to the upper surface of the base plate 110. The partition wall 300 may divide an internal space of the battery pack. The battery module 200 or the battery cell 220 may be positioned in the space divided by the partition wall 300.

The battery pack according to an embodiment of the present disclosure may include a venting device 500. The venting device 500 may be installed on the side wall 120. For example, the venting device 500 may be installed on the side wall 120 of the front side. For example, the venting device 500 may be a gas valve. The venting device 500 may open to discharge gas when the pressure inside the case 100 increases. Additionally, the venting device 500 may block external air from flowing into the case 100. The venting device 500 may be provided in plurality.

Referring to FIGS. 1 to 4, the battery module 200 according to an embodiment of the present disclosure may include a pad 250. The pad 250 may be disposed between a plurality of battery cells 220. The pad 250 may be disposed between at least some of the battery cells 220 and/or on the outside of the stack. For example, the pad 250 may be configured to be placed between each of four battery cells 220 stacked in the left-right direction.

The pad 250 may be made of an elastic material to enable swelling absorption of the battery cell 220. For example, the pad 250 may be made of a foam material such as polyurethane. Alternatively, the pad 250 may be made of a material capable of blocking heat, flames, or the like. For example, the pad 250 may be made of an insulating or fireproof material such as silicone or mica.

The battery module 200 according to an embodiment of the present disclosure may include a front busbar frame assembly 231. The front busbar frame assembly 231 may be provided at the front of the plurality of battery cells 220. The front busbar frame assembly 231 may be electrically connected to electrode leads 224 on the front side of the plurality of battery cells 220.

The battery module 200 according to an embodiment of the present disclosure may include a rear busbar frame assembly 232. The rear busbar frame assembly 232 may be provided at the rear of the plurality of battery cells 220. The rear busbar frame assembly 232 may be electrically connected to electrode leads 224 on the rear side of the plurality of battery cells 220.

The battery module 200 according to an embodiment of the present disclosure may include a front end cover 241. The front end cover 241 may be coupled to the front of the frame 210. The front end cover 241 may cover the front surface of the frame 210. The front end cover 241 may have a square shape.

The battery module 200 according to an embodiment of the present disclosure may include a rear end cover 242. The rear end cover 242 may be coupled to the rear of the frame 210. The rear end cover 242 may cover the rear surface of the frame 210. The rear end cover 242 may have a square shape.

The battery module 200 according to an embodiment of the present disclosure may include a front insulation cover 261. The front insulation cover 261 may be positioned between the front end cover 241 and the front busbar frame assembly 231. The front insulation cover 261 may electrically insulate the front busbar frame assembly 231 and the front end cover 241.

The battery module 200 according to an embodiment of the present disclosure may include a rear insulation cover 262. The rear insulation cover 262 may be positioned between the rear end cover 242 and the rear busbar frame assembly 232. The rear insulation cover 262 may electrically insulate the rear busbar frame assembly 232 and the rear end cover 242.

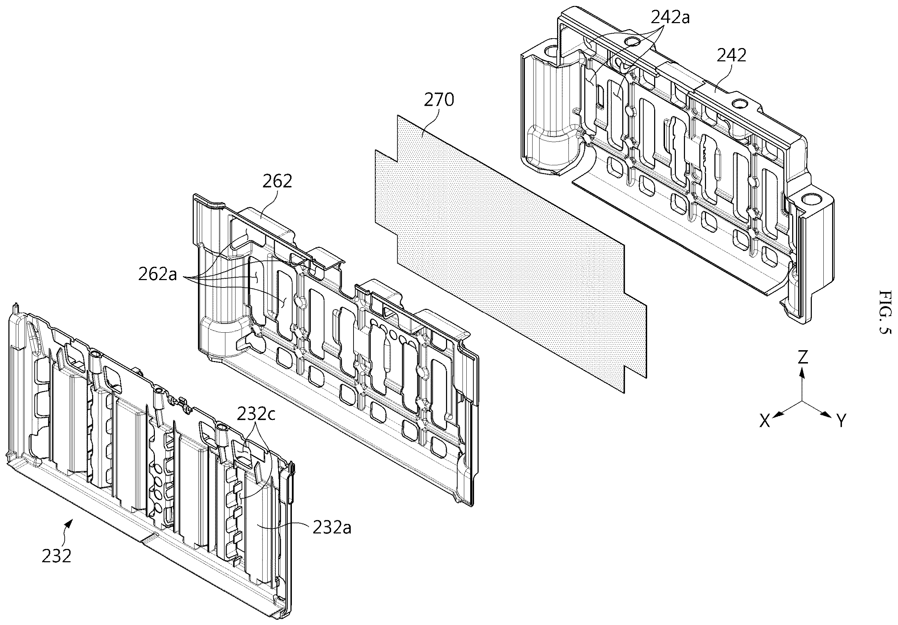

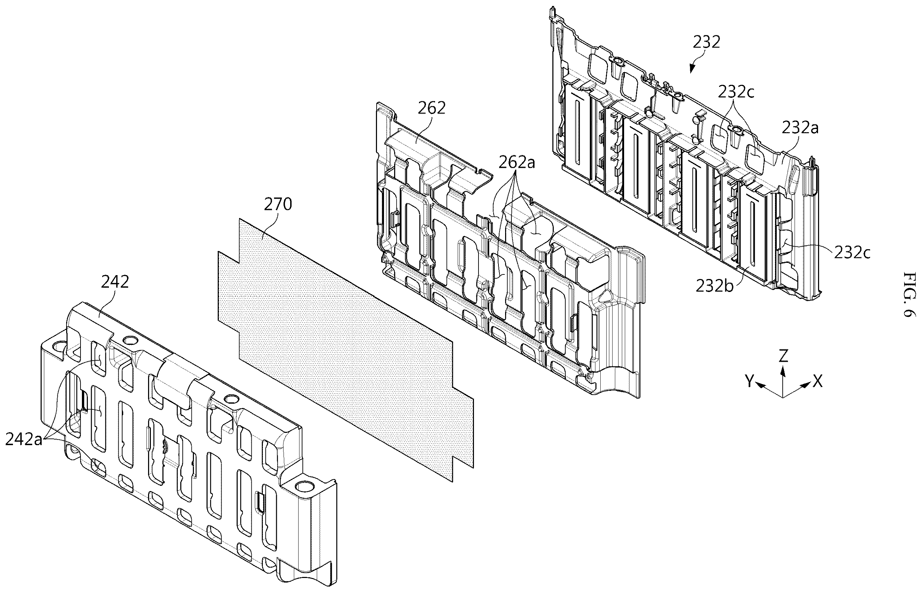

FIG. 5 is an enlarged view of a partial configuration of FIG. 4. FIG. 6 is a view showing the configuration of FIG. 5 in a different direction. Referring to FIGS. 3 to 6, the rear busbar frame assembly 232 according to an embodiment of the present disclosure may include a busbar frame 232a and a busbar 232b. The busbar 232b may be installed in the busbar frame 232a. The busbar 232b may be electrically connected to the electrode leads 224 on the rear side of the plurality of battery cells 220. The busbar 232b may be provided in plurality. The plurality of busbars 232b may be disposed along the left-right direction or the Y-axis direction. Additionally, the busbar frame 232a may have a first venting hole 232c. The first venting hole 232c may be a through hole. The first venting hole 232c may face a first sealing portion 222 on the rear side of the battery cell 220. The first venting hole 232c may be provided in plurality. Some of the plurality of first venting holes 232c may be disposed between two neighboring busbars 232b. The venting gas G and the ignitable particles F generated inside the battery module 200 may be discharged to the rear of the battery module 200 through the first venting hole 232c.

Referring to FIGS. 3 to 6, the battery assembly according to an embodiment of the present disclosure may include a power terminal 231a protruding forward from the frame 210. The power terminal 231a may be provided in the front busbar frame assembly 231. The power terminal 231a may protrude from the front busbar frame assembly 231. The power terminal 231a may be provided in a pair. The power terminal 231a may be exposed to the outside of the battery module 200.

The power terminal 231a may be electrically connected to the power terminal 231a of a neighboring battery module 200. The inter-busbar 600 may electrically connect neighboring battery modules 200.

Major components such as the power terminal 231a, the control terminal, and the inter-busbar 600 may be disposed on the front side of the battery module 200. The venting gas G and the ignitable particles F are discharged to the rear side of the battery module 200, so that damage to the front side of the battery module 200 may be minimized. Damage to the front side of the battery module 200 is minimized, so that the propagation of thermal events to the neighboring battery module 200 may be suppressed.

Referring to FIGS. 3 to 6, the rear insulation cover 262 of the battery module 200 according to an embodiment of the present disclosure may have a second venting hole 262a. The second venting hole 262a may be a through hole. The second venting hole 262a may face the rear busbar frame assembly 232 or the first venting hole 232c. Additionally, the second venting hole 262a may communicate with the first venting hole 232c. The second venting hole 262a may be provided in plurality. The plurality of second venting holes 262a may communicate with the plurality of first venting holes 232c.

Referring to FIGS. 3 to 6, the battery module 200 of the battery pack according to an embodiment of the present disclosure may further include a refractory sheet 270. The refractory sheet 270 may include a material having high heat resistance or fire resistance. The refractory sheet 270 may be positioned on the inner side of the rear end cover 242. Additionally, the refractory sheet 270 may be positioned between the rear end cover 242 and the rear insulation cover 262. Additionally, the refractory sheet 270 may be fixed between the rear end cover 242 and the rear insulation cover 262.

The refractory sheet 270 may be positioned between the third venting hole 242a and the second venting hole 262a. The refractory sheet 270 may cover the plurality of third venting holes 242a and the plurality of second venting holes 262a.

When a thermal event occurs, the internal pressure of the frame 210 may increase due to the venting gas G and the ignitable particles F. As a result, a portion of the refractory sheet 270 may rupture. And, due to the rupture of the refractory sheet 270, some of the second venting holes 262a and some of the third venting holes 242a may communicate with each other, and the venting gas G and the ignitable particles F may be discharged. Additionally, the unruptured portion of the refractory sheet 270 may still cover the remaining second venting hole 262a and the remaining third venting hole 242a. As a result, the venting gas G and the ignitable particles F discharged to the outside of the battery module 200 may be blocked from flowing into the battery module 200.

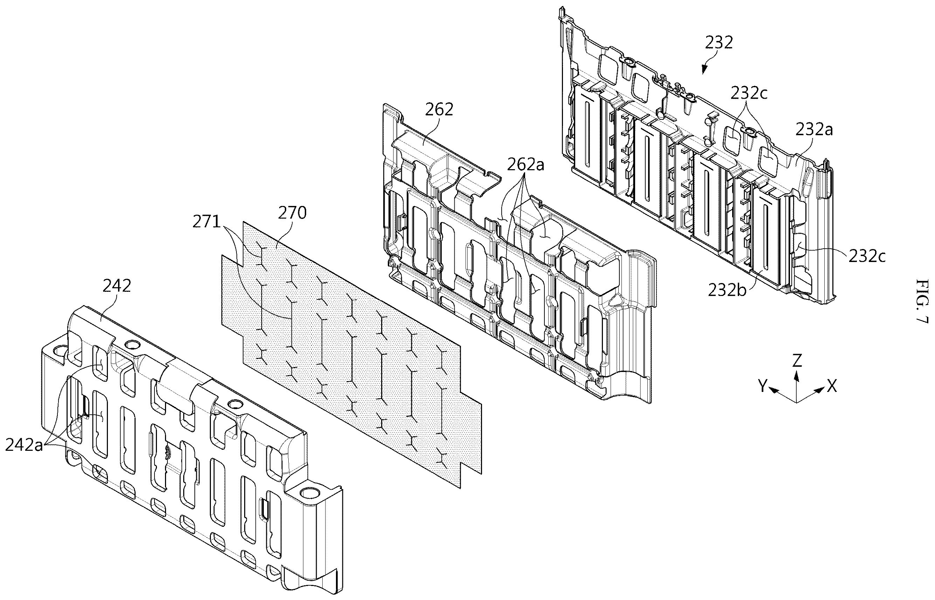

FIG. 7 is a view showing a modified embodiment of FIG. 6. Referring to FIG. 7, the refractory sheet 270 according to an embodiment of the present disclosure may have a score line 271. The score line 271 may be used as a term including and collectively referring to a perforated line 271, a notching line 271, a cutting line 271, a shredding line 271, a tear line 271, or a separation line 271. The score line 271 may be configured to be easily separated by pressure applied to the refractory sheet 270.

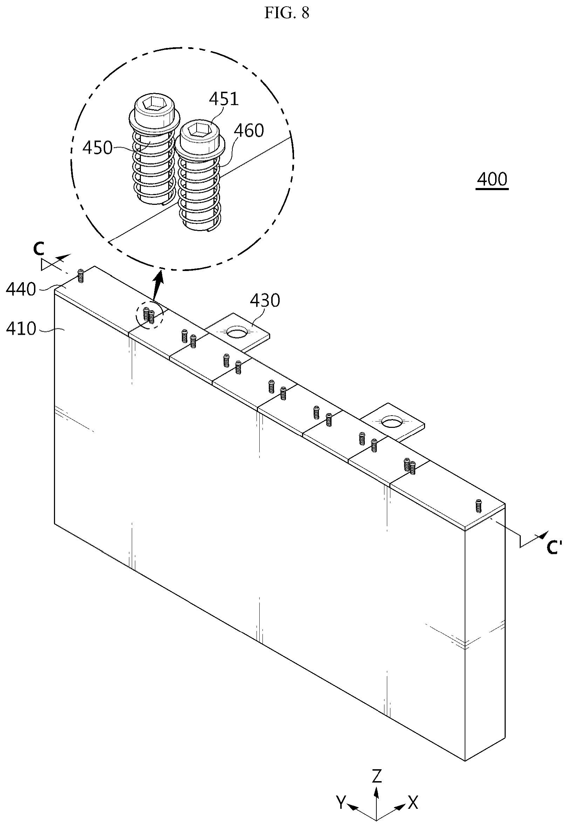

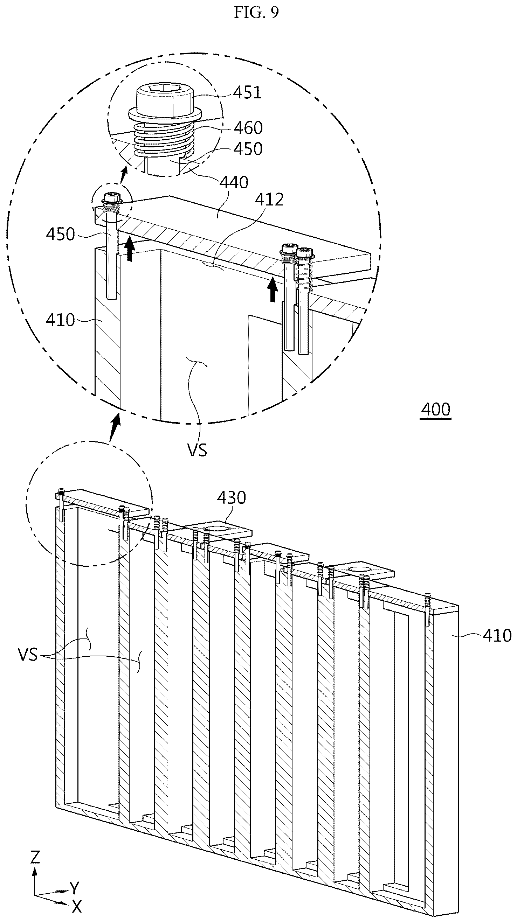

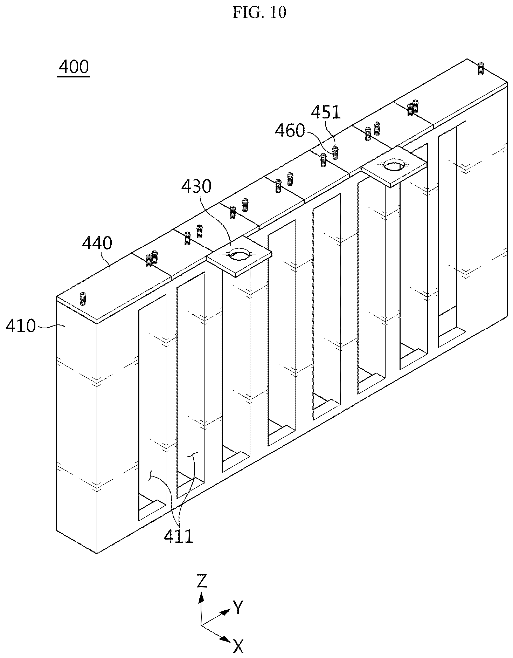

FIG. 8 is a view showing the venting channel 400 of FIG. 2. FIG. 9 is a view showing a cross-sectional configuration taken along the cutting line C-C' of FIG. 8. FIG. 10 is a view showing the venting channel 400 of FIG. 8 in a different direction.

Referring to FIGS. 8 to 10, the outlet hole 412 may be formed on the upper surface of the body 410. The venting gas G introduced into the body 410 through the inlet hole 411 may collide with the body 410. The outlet hole 412 is formed on the upper surface of the body 410, so that the venting gas G with reduced energy may be discharged to the outside of the venting channel 400. The ignitable particles F introduced into the body 410 through the inlet hole 411 may collide with the body 410. The outlet hole 412 is formed on the upper surface of the body 410, so that the ignitable particles may fall downward after colliding with the body 410.

Referring to FIGS. 8 to 10, the venting channel 400 may include a cover 440. The cover 440 may open and close the outlet hole 412. The venting channel 400 may include an elastic member 460. The elastic member 460 may provide a restoring force in a direction in which the cover 440 is closed. When the internal pressure of the venting channel 400 increases, the cover 440 may open the outlet hole 412. When the internal pressure of the venting channel 400 becomes greater than the restoring force provided by the elastic member 460, the outlet hole 412 may be opened. When the internal pressure of the venting channel 400 decreases, the cover 440 may close the outlet hole 412 by the restoring force provided by the elastic member 460. When the venting gas G is discharged to the outside of the venting channel 400 through the outlet hole 412, the venting gas G may be blocked from flowing into the venting channel 400 through the outlet hole 412.

Referring to FIGS. 8 to 10, the venting channel 400 may include a guide bar 450. The guide bar 450 may penetrate the cover 440. The cover 440 may be configured to be movable along the guide bar 450. For example, the cover 440 may be configured to be movable in the Z-axis direction along the guide bar 450. When the cover 440 moves in the +Z-axis direction, the outlet hole 412 may be opened. When the cover 440 moves in the -Z-axis direction, the outlet hole 412 may be closed.

The guide bar 450 may penetrate the elastic member 460. At this time, the elastic member 460 may be a coil spring 460. The guide bar 450 may penetrate the coil spring 460.

The guide bar 450 may be formed at the upper end of the body 410. The guide bar 450 may be formed integrally with the body 410. Alternatively, the guide bar 450 may be coupled, fastened, attached, or fixed to the upper end of the body 410.

The guide bar 450 may include a stopper 451. The stopper 451 may be formed at the upper end of the guide bar 450. The elastic member 460 may be compressed or stretched between the stopper 451 and the cover 440. The elastic member 460 may provide a restoring force in a direction in which the cover 440 is closed. Alternatively, the elastic member 460 may provide a restoring force in the -Z-axis direction.

As the pressure inside the body 410 increases, the cover 440 may move in the +Z-axis direction. Additionally, the elastic member 460 may be compressed. Additionally, the outlet hole 412 may be opened.

As the pressure inside the body 410 decreases, the cover 440 may move in the -Z-axis direction. Additionally, the elastic member 460 may be restored. Additionally, the outlet hole 412 may be closed.

When the venting gas G is discharged to the outside of the venting channel 400 through the outlet hole 412, the venting gas G may be blocked from flowing into the venting channel 400 through the outlet hole 412.

Referring to FIGS. 8 to 10, the venting channel 400 may include a partition 420. The partition 420 may divide the interior of the body 410. The partition 420 may extend along the vertical direction or the Z-axis direction. At this time, each of the partitioned spaces may be referred to as a venting space VS.

Due to the plurality of venting spaces VS, the space where the venting gas G and the ignitable particles F may be propagated may be limited to be smaller. As a result, the propagation of thermal events may be more suppressed.

Referring to FIGS. 8 to 10, the partition 420 of the venting channel 400 according to an embodiment of the present disclosure may be provided in plurality. The plurality of partitions 420 may be disposed along the left-right direction or the Y-axis direction.

The plurality of partitions 420 may divide the internal space of the body 410 into a plurality of venting spaces VS.

Due to the plurality of venting spaces VS, the space where the venting gas G and the ignitable particles F may be propagated may be limited to be smaller. As a result, the propagation of thermal events may be more strongly suppressed.

Referring to FIGS. 8 to 10, each venting space VS of the venting channel 400 according to an embodiment of the present disclosure may have one or more inlet holes 411. Each venting space VS may have one or more outlet holes 412. Each venting space VS may have one or more covers 440.

The outlet holes 412 of each venting space VS may be independently opened and closed. Each venting space VS independently discharges the venting gas G, so that even if one venting space VS discharges the venting gas G, the covers 440 of the remaining venting spaces VS may keep the outlet holes 412 closed. As a result, the propagation of thermal events may be more strongly suppressed.

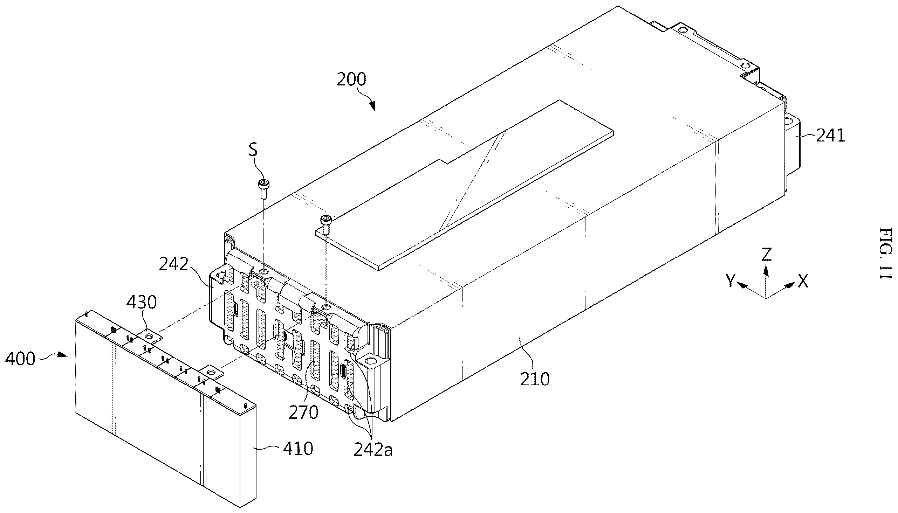

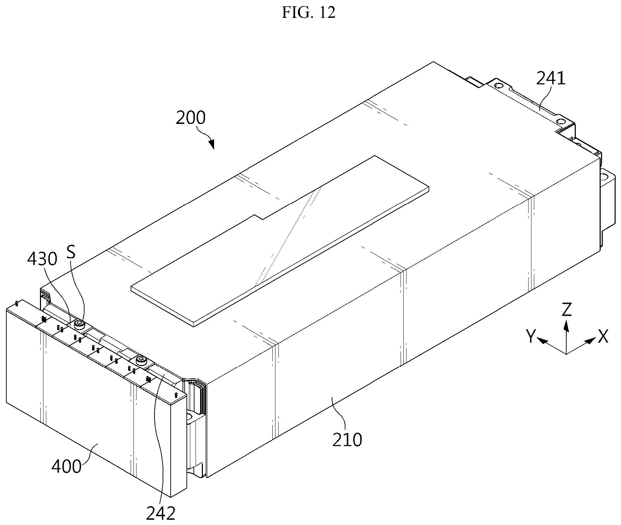

FIGS. 11 and 12 are views showing the coupling of the venting channel 400 and the battery module 200 of FIG. 2. Referring to FIGS. 11 and 12, the venting channel 400 according to an embodiment of the present disclosure may be fastened, coupled, fixed, or attached to the rear end cover 242. The venting channel 400 may have a fastening portion 430 protruding forward or in the +X-axis direction from the body 410. The fastening portion 430 may be formed integrally with the body 410. The fastening portion 430 and the rear end cover 242 may be coupled through a fastening member S.

According to this configuration of the present disclosure, the venting channel 400 may be stably coupled to the rear end cover 242. As a result, even if the venting gas G or the ignitable particles F are discharged, the venting channel 400 may remain stably coupled to the battery module 200.

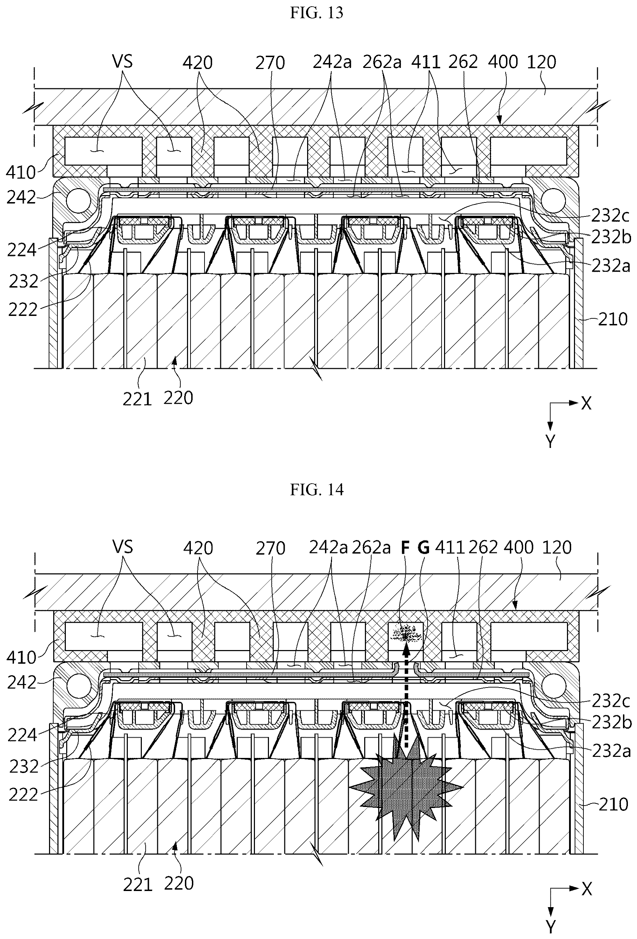

FIG. 13 is a view showing a cross-sectional configuration taken along the cutting line B-B' of FIG. 1. FIG. 14 is a view showing a change in the configuration of FIG. 13 when a thermal event occurs. Referring to FIGS. 13 and 14, the venting channel 400 according to an embodiment of the present disclosure may be positioned between the side wall 120 and the battery module 200. Additionally, the venting channel 400 may be positioned between the side wall 120 and the rear end cover 242.

The battery assembly may be installed on the base plate 110. The battery module 200 may be installed on the base plate 110. The frame 210 may be installed on the base plate 110.

When a thermal event occurs, the venting gas G and the ignitable particles F may move rearward or along the -X-axis direction through the first venting hole 232c and the second venting hole 262a. The venting gas G and the ignitable particles F may rupture the refractory sheet 270. And, the venting gas G and the ignitable particles F may flow into the venting space VS through the ruptured portion of the refractory sheet 270 and the third venting hole 242a. The venting gas G and the ignitable particles F introduced into the venting space VS may collide with the body 410 and have their energy reduced. As a result, the venting gas G and the ignitable particles F may be prevented from flowing into the adjacent venting space VS or the battery module 200. Additionally, the unruptured portion of the refractory sheet 270 may more reliably block the venting gas G and the ignitable particles F from flowing into the battery module 200.

Additionally, according to this configuration of the present disclosure, the side wall 120 forming the exterior of the battery pack may not be damaged by the venting gas G and the ignitable particles F. Therefore, even if a thermal event occurs, the exterior of the battery pack may maintain a stable shape. As a result, the ignitable particles F or flame may not be discharged to the outside of the battery pack. Additionally, the venting gas G with reduced energy and lowered temperature may be discharged to the outside of the battery pack through the venting device 500.

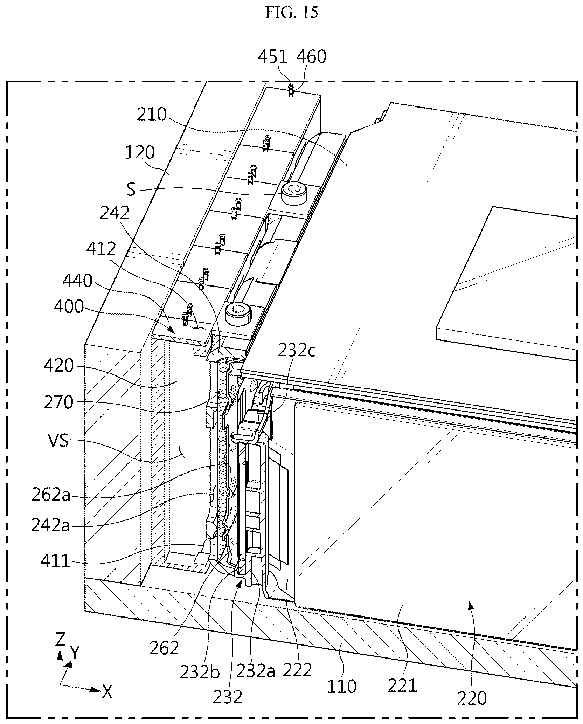

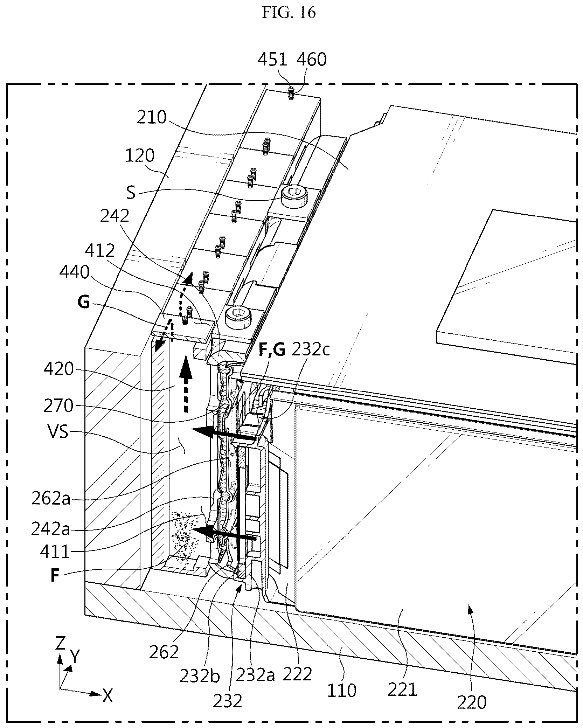

FIG. 15 is a view showing a cross-sectional configuration taken along the cutting line A-A' of FIG. 1. FIG. 16 is a view showing a change in the configuration of FIG. 15 when a thermal event occurs. Referring to FIGS. 1, 2, 15, and 16, the outlet hole 412 of the venting channel 400 according to an embodiment of the present disclosure may face the pack cover 150.

According to this configuration of the present disclosure, when a thermal event occurs, the venting gas G with reduced energy in the venting space VS may move along an upward direction or the +Z-axis direction through the outlet hole 412. Then, the venting gas G may flow between the battery module 200 and the pack cover 150 and be discharged to the outside of the battery pack through the venting device 500.

Additionally, according to this configuration of the present disclosure, the pack cover 150 forming the exterior of the battery pack may not be damaged by the venting gas G and the ignitable particles F. Therefore, even if a thermal event occurs, the exterior of the battery pack may maintain a stable shape.

Additionally, the battery pack according to the present disclosure may further include various other components in addition to this battery assembly, for example, various components of a battery pack known at the time of filing of the present disclosure, such as a BMS, a busbar, a relay, a current sensor, and the like.

The battery pack according to the present disclosure may be applied to vehicles such as electric vehicles or hybrid vehicles. That is, a vehicle according to the present disclosure may include a battery assembly according to the present disclosure. Additionally, the vehicle according to the present disclosure may further include various other components included in the vehicle in addition to this battery assembly. For example, the vehicle according to the present disclosure may further include a body, a motor, a control device such as an electronic control unit (ECU), and the like.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A battery assembly comprising:
a frame providing a space therein and having an opening formed at the rear;
a battery cell positioned inside the frame;
a rear end cover coupled to the opening and having a venting hole; and
a venting channel that has a body providing a space therein, an inlet hole formed in the body and communicating with the venting hole, and an outlet hole formed in the body and configured to be openable.

2. The battery assembly according to claim 1,
wherein the outlet hole is formed on an upper surface of the body.

3. The battery assembly according to claim 1,
wherein the venting channel comprises:
a cover that opens and closes the outlet hole; and
an elastic member that provides a restoring force in a direction in which the cover is closed.

4. The battery assembly according to claim 3,
wherein the venting channel further comprises:
a guide bar penetrating the cover and the elastic member.

5. The battery assembly according to claim 1,
wherein the venting channel comprises:
a partition that divides the interior of the body along the vertical direction.

6. The battery assembly according to claim 5,
wherein the partition is provided in plurality, and
the plurality of partitions are disposed along the left-right direction.

7. The battery assembly according to claim 6,
wherein the plurality of partitions divide a space provided by the body into a plurality of venting spaces,
wherein the inlet hole and the outlet hole are provided in each of the plurality of venting spaces.

8. The battery assembly according to claim 7,
wherein the plurality of outlet holes are configured to be independently openable.

9. The battery assembly according to claim 1,
wherein the venting channel is fastened to the rear end cover.

10. The battery assembly according to claim 1, further comprising:
a power terminal protruding forward from the frame.

11. A battery pack comprising a battery assembly according to any one of claims 1 to 10.

12. The battery pack according to claim 11, further comprising:
a case providing a space therein and accommodating the battery assembly,
wherein the case comprises:
a base plate on which the battery assembly is installed; and
a side wall installed on the base plate,
wherein the venting channel is disposed between the rear end cover and the side wall.

13. A vehicle comprising a battery assembly according to any one of claims 1 to 10.
